(19) **Europäisches Patentamt / European Patent Office / Office européen des brevets**

(11) **EP 4 223 560 B1**

(12) **EUROPEAN PATENT SPECIFICATION**

(45) Date of publication and mention
of the grant of the patent:
**19.11.2025 Bulletin 2025/47**

(21) Application number: **21906025.8**

(22) Date of filing: **02.06.2021**

(51) International Patent Classification (IPC):
**B60C 11/12** *(2006.01)*    **B60C 3/04** *(2006.01)*
**B60C 5/00** *(2006.01)*    **B60C 11/04** *(2006.01)*
**B60C 11/03** *(2006.01)*

(52) Cooperative Patent Classification (CPC):
**B60C 3/04; B60C 11/0323; B60C 11/04;
B60C 11/1281;** B60C 2011/0033; B60C 2011/1209

(86) International application number:
**PCT/JP2021/021089**

(87) International publication number:
**WO 2022/130658 (23.06.2022 Gazette 2022/25)**

(54) **PNEUMATIC RADIAL TYRE FOR PASSENGER VEHICLE**

RADIALER LUFTREIFEN FÜR PERSONENKRAFTWAGEN

PNEUMATIQUE À CARCASSE RADIALE POUR VÉHICULE DE TOURISME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.12.2020 JP 2020208579**

(43) Date of publication of application:
**09.08.2023 Bulletin 2023/32**

(73) Proprietor: **BRIDGESTONE CORPORATION**
**Chuo-ku**
**Tokyo 104-8340 (JP)**

(72) Inventors:
• **KUWAYAMA Isao**
**Tokyo 104-8340 (JP)**
• **HATANAKA Shintaro**
**Tokyo 104-8340 (JP)**

(74) Representative: **Marks & Clerk LLP**
**15 Fetter Lane**
**London EC4A 1BW (GB)**

(56) References cited:
**EP-A1- 3 202 596**      **WO-A1-2013/065319**
**WO-A1-2013/065319**   **WO-A1-2019/124037**
**WO-A1-2019/124037**   **JP-A- 2005 161 967**
**JP-A- 2008 007 047**   **JP-A- 2017 206 194**
**JP-A- 2017 206 194**   **JP-A- 2020 001 540**

## EP 4 223 560 B1

**Description**

TECHNICAL FIELD

The present invention relates to a pneumatic radial tire for passenger vehicles.

BACKGROUND

In the past, the applicant has proposed a technology to improve fuel efficiency, etc. in a pneumatic radial tire for passenger vehicles by narrowing the width and increasing the diameter of the tire (e.g., PTL 1).

In the above pneumatic radial tire for passenger vehicles, the weight of the tread rubber decreases with narrower widths, however the weight of the tread rubber increases with larger diameters.

Therefore, the tread rubber could be made in thinner gauge to further reduce tire weight.

In the future, it is envisioned that the pneumatic radial tire for passenger vehicles will also be used by retreading, whereby only the tread rubber of the tire is replaced to save material, and in such cases, the tire will be used by retreading especially with thin gauge tread.

The narrower width of the above pneumatic radial tire for passenger vehicles allows it to drain well to the side of the tire, even if the tread rubber is made in thin gauge and the groove depth is shallower. Attention is also drawn to the disclosures of PTL 2-5.

CITATION LIST

Patent Literature

> PTL 1: 2011-207283A
> PTL 2: EP 3 202 596 A1
> PTL 3: WO 2019/124037 A1
> PTL 4: WO 2013/065319 A1
> PTL 5: JP 2017 206194 A

SUMMARY

(Technical Problem)

However, thinner-gauged tread rubber could reduce ride comfort. This problem is particularly acute in narrower-width and larger-diameter tires, which are also expected to be used with high internal pressure.

It is therefore an object of the present invention to provide a pneumatic radial tire for passenger vehicles that can improve fuel efficiency while suppressing the decrease in ride comfort.

(Solution to Problem)

The structure of the present invention is as follows:

> (1) A pneumatic radial tire for passenger vehicles according to claim 1.
> (2) A pneumatic radial tire for passenger vehicles according to claim 2.
> (3) A pneumatic radial tire for passenger vehicles according to claim 3.

As used herein, the term "rubber gauge" refers to the rubber gauge at the tire equatorial plane under the reference state, with the tire mounted on the rim, filled with the prescribed internal pressure, and unloaded, and shall mean the thickness in the tire radial direction from the outer surface to the outermost reinforcing member in the tire radial direction. Note that if a groove is formed on the tire equatorial plane, the above thickness is determined by drawing a hypothetical line assuming there is no groove.

The term "contact patch" refers to the surface that will be in contact with the road surface when the tire is mounted on the rim, filled with the prescribed internal pressure, and loaded with the maximum load. The term "tread surface" refers to the entire circumferential surface of the contact patch.

In this specification, of the cuts formed in the tread surface, those with an opening width of more than 1 mm in the above reference condition are considered grooves, and those with an opening width of 1 mm or less in the above reference condition are considered sipes.

As used herein, the term "rim" refers to a standard rim in the applicable size (Measuring Rim in the STANDARDS MANUAL by ETRTO and Design Rim in the YEAR BOOK by TRA) that is or will be described in the industry standards in effect in the region where the tire is produced and used, such as the JATMA YEAR BOOK by JATMA (Japan Automobile Tyre Manufacturers Association) in Japan, the STANDARDS MANUAL by ETRTO (European Tyre and Rim Technical Organization) in Europe, and the YEAR BOOK by TRA (Tire and Rim Association, Inc.) in the United States, etc. That is, the term of the above-mentioned "rim" includes not only current sizes, but also sizes that may be included in the above industry standards in the future. An example of "sizes that may be included in the future" would be the size listed as "FUTURE DEVELOPMENTS" in the ETRTO 2013 edition. However, for sizes not listed in the above industry standards, the term "rim" refers to a rim with a width corresponding to the bead width of the tire.

In addition, the term "prescribed internal pressure" refers the air pressure corresponding to the maximum load capacity of a single wheel in the applicable size and ply rating as described in JATMA etc., above, i.e., maximum air pressure. For sizes not listed in the above industry standards, the term "prescribed internal pressure" shall mean the air pressure corresponding to the maximum load capacity prescribed for each vehicle in which the tire is mounted, i.e., the maximum air pressure. Furthermore, the term "maximum load" refers the load corresponding to the above maximum load capacity.

(Advantageous Effect)

According to the present invention, it is possible to provide a pneumatic radial tire for passenger vehicles that can improve fuel efficiency while suppressing the decrease in ride comfort.

BRIEF DESCRIPTION OF THE DRAWINGS

In the accompanying drawings:

FIG.1 is a schematic diagram illustrating the cross-sectional width SW and outer diameter OD of the tire;
FIG.2 is a cross-sectional view in the tire width direction, illustrating a pneumatic radial tire for passenger vehicles according to one embodiment of the first to third aspects of this invention;
FIG.3 is a plan view, schematically illustrating the tread surface of the tread portions of the pneumatic radial tires for passenger vehicles according to one embodiment of the first to third aspects of this invention;
FIG.4A schematically illustrates the cross-sectional shape of a width direction sipe; and
FIG.4B schematically illustrates the cross-sectional shape of the circumferential main groove.

DETAILED DESCRIPTION

The following is a detailed illustrative description of one embodiment of the pneumatic radial tire for passenger vehicles of this invention, with reference to the drawings.

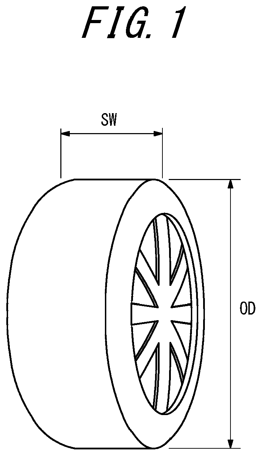

Figure 1 is a schematic diagram illustrating the cross-sectional width SW and outer diameter OD of the tire.

In the one embodiment of a pneumatic radial tire for passenger vehicles, hereinafter referred to simply as "tire", in the first aspect of the present invention, the cross-sectional width SW of the tire is less than 165 (mm), the ratio SW/OD of the cross-sectional width SW to the outer diameter OD of the tire is 0.26 or less, and accordingly the tire has a narrow-width and large-diameter shape. By making the cross-sectional width SW of the tire narrower relative to the outer diameter OD of the tire, air resistance can be reduced; by increasing the outer diameter OD of the tire relative to the cross-sectional width SW of the tire, the deformation of the tread rubber near the contact patch of the tire can be suppressed and rolling resistance can be reduced; and these can improve the fuel efficiency of the tire. The above ratio SW/OD is preferably 0.25 or less, and more preferably 0.24 or less.

The above ratio is preferably satisfied when the internal pressure of the tire is 200 kPa or higher, more preferably when it is 220 kPa or higher, and even more preferably when it is 280 kPa or higher. This is because rolling resistance can be reduced. On the other hand, the above ratio is preferably satisfied when the internal pressure of the tire is 350 kPa or less. This is because ride comfort can be improved.

From the viewpoint of securing the ground contact area, the cross-sectional width SW of the tire is preferably 105 mm or more, more preferably 125 mm or more, even more preferably 135 mm or more, and especially preferred 145 mm or more, within the range satisfying the above ratio. On the other hand, from the viewpoint of reducing air resistance, the cross-sectional width SW of the tire is preferably 155 mm or less, within the range satisfying the above ratio. From the viewpoint of reducing rolling resistance, the outer diameter OD of the tire is preferably 500 mm or more, more preferably 550 mm or more, and even more preferably 580 mm or more, within the range satisfying the above ratio. On the other hand, from the viewpoint of reducing air resistance, the outer diameter OD of the tire is preferably 800 mm or less, more preferably 720 mm or less, even more preferably 650 mm or less, and especially preferred 630 mm or less, within the range satisfying the above ratio. From the viewpoint of reducing rolling resistance, the rim diameter is preferably 16 inches or larger, more preferably 17 inches or larger, and even more preferably 18 inches or larger, when the cross-sectional width SW and the outer diameter OD of the tire satisfy the above ratio. On the other hand, from the viewpoint of reducing air resistance, the rim diameter is preferably 22 inches or less, more preferably 21 inches or less, even more preferably 20 inches or less, and especially preferred 19 inches or less, when the cross-sectional width SW and the outer diameter OD of the tire satisfy the above ratio. The aspect ratio of the tire is preferably 45 to 70, and more preferably 45 to 65, when the cross-sectional width SW and the outer diameter OD of the tire satisfy the above ratio.

The specific tire sizes are not limited, but can be any of the following as an example: 105/50R16, 115/50R17, 125/55R20, 125/60R18, 125/65R19, 135/45R21, 135/55R20, 135/60R17, 135/60R18, 135/60R19, 135/65R19, 145/45R21, 145/55R20, 145/60R16, 145/60R17, 145/60R18, 145/60R19, 145/65R19, 155/45R18, 155/45R21, 155/55R18, 155/55R19, 155/55R21, 155/60R17, 155/65R18, 155/70R17, 155/70R19.

In the one embodiment of the tire in the second aspect of the present invention, the cross-sectional width SW of the tire is 165 (mm) or more, the cross-sectional width SW (mm) and the outer diameter OD (mm) of the tire satisfy the following relationship and the tire has a narrow-width and large-diameter shape:

$$OD \text{ (mm)} \geq 2.135 \times SW \text{ (mm)} + 282.3$$

Satisfying the above relationship reduces air resistance and rolling resistance, thereby improving fuel efficiency of the tire.

In the second aspect, the ratio SW/OD of the cross-sectional width SW and the outer diameter OD of the tire is preferably 0.26 or less, more preferably 0.25 or less, and even more preferably 0.24 or less, after satisfying the above relationship. This is because it can further improve the fuel efficiency of the tire.

The above relationship and/or ratio is preferably satisfied when the internal pressure of the tire is 200 kPa or higher, more preferably when it is 220 kPa or higher, and even more preferably when it is 280 kPa or higher. This is because rolling resistance can be reduced. On the other hand, the above relationship and/or ratio is preferably satisfied when the internal pressure of the tire is 350 kPa or less. This is because ride comfort can be improved.

From the viewpoint of securing the ground contact area, the cross-sectional width SW of the tire is preferably 175 mm or more, and more preferably 185 mm or more, within the range satisfying the above relationship. On the other hand, from the viewpoint of reducing air resistance, the cross-sectional width SW of the tire is preferably 230 mm or less, more preferably 215 mm or less, even more preferably 205 mm or less, and especially preferred 195 mm or less, within the range satisfying the above relationship. From the viewpoint of reducing rolling resistance, the outer diameter OD of the tire is preferably 630 mm or more, and more preferably 650 mm or more, within the range satisfying the above relationship. On the other hand, from the viewpoint of reducing air resistance, the outer diameter OD of the tire is preferably 800 mm or less, more preferably 750 mm or less, and even more preferably 720 mm or less, within the range satisfying the above relationship. From the viewpoint of reducing rolling resistance, the rim diameter is preferably 18 inches or larger, and more preferably 19 inches or larger, when the cross-sectional width SW and the outer diameter OD of the tire satisfy the above relationship. On the other hand, from the viewpoint of reducing air resistance, the rim diameter is preferably 22 inches or less, and more preferably 21 inches or less, when the cross-sectional width SW and the outer diameter OD of the tire satisfy the above relationship. The aspect ratio of the tire is preferably 45 to 70, and more preferably 45 to 65, when the cross-sectional width SW and the outer diameter OD of the tire satisfy the above relationship.

The specific tire sizes are not limited, but can be any of the following as an example: 165/45R22, 165/55R18, 165/55R19, 165/55R20, 165/55R21, 165/60R19, 165/65R19, 165/70R18, 175/45R23, 175/55R19, 175/55R20, 175/55R22, 175/60R18, 185/45R22, 185/50R20, 185/55R19, 185/55R20, 185/60R19, 185/60R20, 195/50R20, 195/55R20, 195/60R19, 205/50R21, 205/55R20, 215/50R21.

In the one embodiment of the tire in the third aspect of the present invention, the cross-sectional width SW (mm) and the outer diameter OD (mm) of the tire satisfy the following relationship and accordingly the tire has a narrow and large diameter shape:

$$OD \text{ (mm)} \geq -0.0187 \times SW \text{ (mm)}^2 + 9.15 \times SW \text{ (mm)} - 380$$

Satisfying the above relationship reduces air resistance and rolling resistance, thereby improving fuel efficiency of the tire.

In the third aspect, the ratio SW/OD of the cross-sectional width SW and the outer diameter OD of the tire is preferably 0.26 or less, more preferably 0.25 or less, and even more preferably 0.24 or less, after satisfying the above relationship. This is because it can further improve fuel efficiency of the tire.

The above relationship and/or ratio is preferably satisfied when the internal pressure of the tire is 200 kPa or higher, more preferably when it is 220 kPa or higher, and even more preferably when it is 280 kPa or higher. This is because rolling resistance can be reduced. On the other hand, the above relationship and/or ratio is preferably satisfied when the internal pressure of the tire is 350 kPa or less. This is because ride comfort can be improved.

From the viewpoint of securing the ground contact area, the cross-sectional width SW of the tire is preferably 105 mm or more, more preferably 125 mm or more, even more preferably 135 mm or more, and especially preferred 145 mm or more, within the range satisfying the above relationship. On the other hand, from the viewpoint of reducing air resistance, the cross-sectional width SW of the tire is preferably 230 mm or less, more preferably 215 mm or less, even more preferably 205 mm or less, and especially preferred 195 mm or less, within the range satisfying the above relationship. From the viewpoint of reducing rolling resistance, the outer diameter OD of the tire is preferably 500 mm or more, more preferably 550 mm or more, even more preferably 580 mm or more, within the range satisfying the above relationship. On the other hand, from the viewpoint of reducing air resistance, the outer diameter OD of the tire is preferably 800 mm or less, more preferably 750 mm or less, and even more preferably 720 mm or less, within the range satisfying the above relationship. From the viewpoint of reducing rolling resistance, the rim diameter is preferably 16 inches or larger, more preferably 17 inches or larger, and even more preferably 18 inches or larger, when the cross-sectional width SW and the outer diameter OD of the tire satisfy the above relationship. On the other hand, from the viewpoint of reducing air resistance, the rim diameter is preferably 22 inches or less, more preferably 21 inches or less, and even more preferably 20 inches or less, when the cross-sectional width SW and the outer diameter OD of the tire satisfy the above relationship. The aspect ratio of the tire is preferably 45 to 70, and more preferably 45 to 65, when the cross-sectional width SW and the outer diameter OD of the tire satisfy the above ratio.

The specific tire sizes are not limited, but can be any of the following as an example: 105/50R16, 115/50R17, 125/55R20, 125/60R18, 125/65R19, 135/45R21, 135/55R20, 135/60R17, 135/60R18, 135/60R19, 135/65R19, 145/45R21, 145/55R20, 145/60R16, 145/60R17, 145/60R18, 145/60R19, 145/65R19, 155/45R18, 155/45R21, 155/55R18, 155/55R19, 155/55R21, 155/60R17, 155/65R18, 155/70R17, 155/70R19, 165/45R22, 165/55R18, 165/55R19, 165/55R20, 165/55R21, 165/60R19, 165/6R19, 165/70R18, 175/45R23, 175/55R18, 175/55R19, 175/55R20, 175/55R22, 175/60R18, 185/45R22, 185/50R20, 185/55R19, 185/55R20, 185/60R19, 185/60R20, 195/50R20, 195/55R20, 195/60R19, 205/50R21, 205/55R20, 215/50R21.

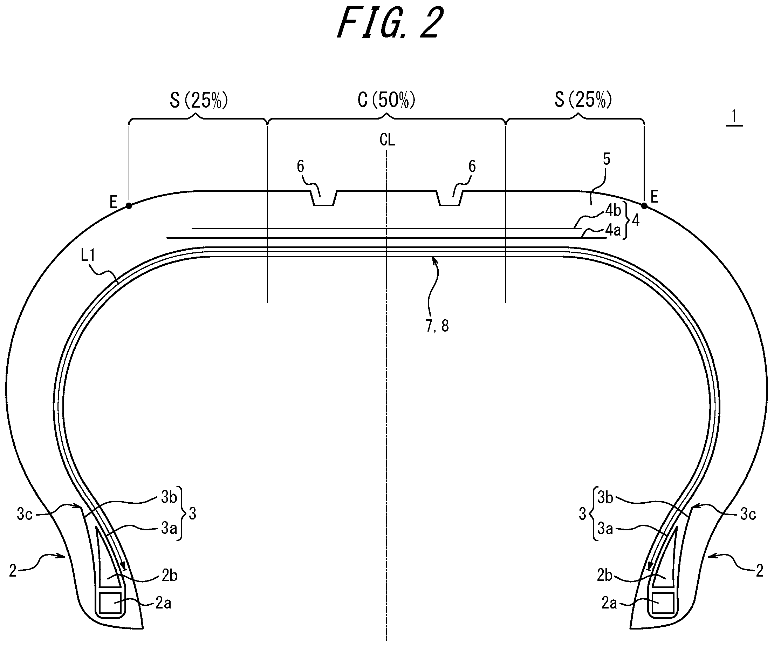

Figure 2 is a cross-sectional view in the tire width direction, illustrating a pneumatic radial tire for passenger vehicles according to one embodiment of the first to third aspects of this invention. Figure 2 illustrates the cross section in the tire width direction of the tire when the tire is mounted on a rim, filled with prescribed internal pressure, and unloaded. As illustrated in Figure 2, the tire 1 comprises a carcass 3 consisting of plies of radially arranged cords, spanning toroidally between a pair of bead portions 2. In addition, the tire 1 comprises, on the outer side of the carcass 3 in the tire radial direction, a belt 4 consisting of two belt layers 4a, 4b in the illustrated example and a tread portion 5 in this order.

In this example, the pair of bead portions 2 each have a bead core 2a embedded therein. In the present invention, the cross-sectional shape and material of the bead core 2a are not limited and can be of the configuration normally used in the pneumatic radial tires for passenger vehicles. In the present invention, the bead core 2a may be divided into a plurality of small bead cores. Alternatively, the tires herein can be configured without the bead core 2a.

The tire 1 in the illustrated example comprises a bead filler 2b with abbreviated triangular cross section on the outer side of the bead core 2a in the tire radial direction. The cross-sectional shape of the bead filler 2b is not limited to this example, nor is its material. Alternatively, the tire can be made lighter by not comprising bead filler 2b.

In this embodiment, the tire widthwise cross-sectional area S1 of the bead filler 2b is preferably one or more and four or less times larger than the tire widthwise cross-sectional area S2 of the bead core 2a. This is because; by making the above cross-sectional area S1 one time or more than the above cross-sectional area S2, the rigidity of the bead portion 2 can be secured, and by making the above cross-sectional area S1 four times or less than the above cross-sectional area S2, the tire can be made lighter and fuel efficiency can be further improved. In addition, in this embodiment, the ratio of the gauge Ts of the sidewall portion at the tire maximum width position to the bead width Tb at the center position in the tire radial direction of the bead core 2a, Ts/Tb, is preferably 15% or more and 40% or less. Here, the "tire maximum width position" is the tire radial position where the width in the tire width direction is maximum, and if it is the radially extending area, it is the center position in the tire radial direction of that area. Also, the "bead width" is the width in the tire width direction of the bead portion 2. This is because; setting the above ratio Ts/Tb to 15% or more ensures the rigidity of the sidewall portion, while setting the above ratio Ts/Tb to 40% or less makes the tire lighter and further improves fuel efficiency. Note, the gauge Ts is the sum of the thicknesses of all members, including rubber, reinforcement members, and inner liners. However, in a case that a sound control body is placed on the inner surface of the sidewall portion, its thickness is not included. Here, the term "sidewall portion" refers to the tire radial region on the outside of the ground contact edge E in the tire width direction, extending from the ground contact edge E to the outer edge in the tire radial direction of the bead portion. The "outer edge in the tire radial direction of the bead portion" is the outer edge in the tire radial direction of bead filler 2b if the tire has a bead filler 2b, or the outer edge in the tire radial direction of bead core 2a if the tire does not have a bead filler 2b. In the case of a structure in which the bead core 2a is divided into multiple small bead cores by the carcass 3, Tb is the distance between the innermost and outermost ends of all small bead cores in the tire width direction. In this embodiment, the ratio of the gauge Ts of the sidewall portion at the tire maximum width position to the diameter Tc of the carcass cords, Ts/Tc, is preferably 5 or more and 10 or less. This is because setting the above ratio Ts/Tc to 5 or more ensures the rigidity of the sidewall portion, while setting the ratio Ts/Tc to 10 or less makes the tire lighter and further improves fuel efficiency. In this embodiment, the tire maximum width position can be provided, for example, in the range of 50% to 90% of the tire cross-sectional height to the outer side in the tire radial direction from the bead base line. The "bead base line" is an imaginary line passing through the bead base and parallel to the tire width direction.

Here, the term "bead portion" refers to the portion of the tire in the tire radial direction from the rim baseline to the outermost edge in the tire radial direction of the bead filler when the tire has bead filler, or to the portion in the tire radial direction from the rim baseline to the outermost edge in the tire radial direction of the bead core when the tire has no bead filler.

In this embodiment, the tire 1 can also be configured with a rim guard. In this embodiment, the bead portion 2 can be further provided with additional members such as rubber layers or cord layers for reinforcement or other purposes. Such additional members can be provided in various positions relative to the carcass 3 and the bead filler 2b.

In the example illustrated in Figure 2, the carcass 3 consists of a single carcass ply. On the other hand, in the present invention, the number of carcass plies is not limited and can be two or more. Further, in the example illustrated in Figure 2, the carcass 3 has a carcass body portion 3a that toroidally spans between a pair of bead portions 2 and a carcass turn-up portion 3b that is folded from the carcass body portion 3a around the bead core 2a. On the other hand, in the present invention, the carcass turn-up portion 3b can be wrapped around the bead core 2a, or it can be sandwiched between a number of divided small bead cores. In the illustration, the end 3c of the carcass turn-up portion 3b is located outer side in the tire radial direction than the outer edge in the tire radial direction of the bead filler 2b, and inner side in the tire radial direction than the maximum width position of the tire. This allows the tire to be lightweight while maintaining the rigidity of the sidewall portion. On the other hand, in the present invention, the end 3c of the carcass turn-up portion 3b may be located inner side in the tire radial direction than the outer edge in the tire radial direction of the bead filler 2b, or it may be located outer side in the tire radial direction than the maximum width position of the tire. Alternatively, the end 3c of the carcass turn-up portion 3b can be an envelope structure; with the end 3c located between the carcass body 2a and the belt 4 in the tire radial direction and located inner side in the tire width direction than the end of the belt 4, for example the end of the belt layer 4b. Furthermore, when the carcass 3 consists of multiple carcass plies, the position of the edge 3c of the carcass turn-up portion 3b, e.g., in the tire radial direction, can be the same or different among the carcass plies. The number of cords in the carcass 3 is not particularly limited, however, can be in the range of 20 to 60 cords/50 mm, for example. In addition, various structures can be used for the carcass lines. For example, in the tire radial direction, the carcass maximum width position can be moved closer to the bead portion 2 side or the tread portion 5 side. For example, the carcass maximum width position can be provided in the range of 50% to 90% of the tire cross-sectional height, to the outer side in the tire radial direction from the bead base line. The above-mentioned "radially arranged" means a state of 85 degrees or more with respect to the tire circumferential direction, preferably 90 degrees with respect to the tire circumferential direction.

The tire according to this embodiment preferably comprises one or more inclined belt layers consisting of a rubber-coated layer of cords extending at an angle with respect to the tire circumferential direction, and it is most preferable to have two layers of that for the balance between weight reduction and suppression of distortion of the contact patch shape. From the viewpoint of weight reduction, one belt layer can be used, and from the viewpoint of suppressing the distortion of the contact patch shape, three or more layers can be used. In the example illustrated in Figure 2, of the two belt layers 4a, 4b, the tire widthwise width of the belt layer 4b on the outer side in the tire radial direction is smaller than the tire widthwise width of the belt layer 4a on the inner side in the tire radial direction. On the other hand, the tire widthwise width of the belt layer 4b on the outer side in the tire radial direction can be larger than or the same as the tire widthwise width of the belt layer 4a in the tire radial direction. The tire widthwise width of the belt layer having the largest width in the tire width direction, in the illustrated example that of the belt layer 4a, is preferably 90 to 115% of the ground contact width, and especially preferred 100 to 105% of the ground contact width. The term "ground contact width" refers to the distance in the tire widthwise direction between the above-mentioned ground contact edges E on the above-mentioned contact patch.

In this embodiment, metal cords, especially steel cords, are most preferred as the belt cords for the belt layers 4a, 4b, but organic fiber cords can also be used. The steel cords are mainly composed of steel and can contain various trace inclusions such as carbon, manganese, silicon, phosphorus, sulfur, copper, and chromium. In this embodiment, the belt cords of the belt layers 4a, 4b can be monofilament cords, cords with multiple filaments drawn together, or cords with multiple filaments twisted together. Various twist structures can be adopted, and the cross-sectional structure, twist pitch, twist direction, and distance between adjacent filaments can also be varied. Further, the cords made of twisted filaments of different materials can also be used, the cross-sectional structure is not limited, and the various twist structures such as single twist, layer twist, and multiple twist can be used.

In this embodiment, the inclination angle of the belt cords of the belt layers 4a, 4b is preferably 10 degrees or more with respect to the tire circumferential direction. In this embodiment, the inclination angle of the belt cords of the belt layers 4a, 4b is preferably a high angle, specifically more than 20 degrees with respect to the tire circumferential direction, preferably more than 35 degrees, and especially in the range of 55 to 85 degrees with respect to the tire circumferential direction. This is because an inclination angle of 20 degrees or more, preferably 35 degrees or more, increases rigidity in the tire width direction and improves handling stability performance, especially during cornering. In addition, this is because it also reduces shear deformation of the interlayer rubber, thereby reducing rolling resistance.

The tire according to this embodiment does not comprise the circumferential belt layer consisting of cords extending approximately along the tire circumferential direction on the outer side in the tire radial direction of the belt 4. On the other hand, in this invention, the tire can also be configured with a circumferential belt consisting of one or more circumferential belt layers on the outer side in the tire radial direction of the belt 4. In particular, it is preferable to provide a circumferential belt when the inclination angles $\theta 1$, $\theta 2$ of the belt cords of the belt layers 4a, 4b constituting the belt 4 are 35 degrees or more. In this case, it is preferable to the circumferential belt that the tire circumferential rigidity per unit width is higher in the center region C than in the shoulder region S.

In the cross-sectional view of the tire width direction when the tire is mounted on a rim, filled with prescribed internal pressure, and unloaded, the center region C is the tire widthwise direction area in the center 50% between the ground contact edges E and the shoulder regions S are the tire widthwise direction areas of 25% each on the outer side of the center region C.

For example, by increasing the number of circumferential belt layers in the center region C compared to the shoulder regions S, the circumferential rigidity per unit width of the center region C can be higher than that of the shoulder regions S. Many tires with belt cords of belt layers 4a, 4b inclined at 35 degrees or more with respect to the tire circumferential direction produce loud noise emission in the high-frequency range of 400 Hz to 2 kHz, because the tread surface will have a uniformly large vibration shape in first, second, and third etc., cross-sectional vibration modes. Therefore, by locally increasing the circumferential rigidity of the center region C of the tread portion 5, the center region C of the tread portion 5 becomes more difficult to spread in the tire circumferential direction, and the spreading of the tread surface in the tire circumferential direction is suppressed, resulting in a reduction in noise emission.

In this embodiment, it is also preferable that the inclination angle $\theta 1$ of the belt cords of the belt layer with the widest width in the tire width direction, the belt layer 4a in the illustrated example, and the inclination angle $\theta 2$ of the belt cords of the belt layer with the narrowest width in the tire width direction, the belt layer 4b in the illustrated example, with respect to the tire circumferential direction are $35° \leq \theta 1 \leq 85°$, $10° \leq \theta 2 \leq 30°$, and $\theta 1 > \theta 2$. Many tires with belt cords of belt layers inclined at 35 degrees or more with respect to the circumferential direction produce loud noise emission in the high-frequency range of 400 Hz to 2 kHz, because the tread surface will have a uniformly large vibration shape, in first, second, and third etc., cross-sectional vibration modes. Therefore, by locally increasing the circumferential rigidity of the center region C of the tread portion 5, the center region C of the tread portion 5 becomes more difficult to spread in the tire circumferential direction, and the spreading of the tread surface in the tire circumferential direction is suppressed, resulting in a reduction in noise emission.

Here, in this embodiment, in case a circumferential belt is provided, the circumferential belt layer is preferably highly rigid, more specifically, it preferably consists of rubber-coated layer of cords extending in the tire circumferential direction, and $1500 \geq X \geq 225$ is satisfied when defining $X = Y \times n \times m \times d$ with the Young's modulus of cords as Y (GPa), the number of implantation of cords as n (pcs/50mm), the number of the circumferential belt layer as m (layers), and the cord diameter as d (mm). The young's modulus means Young's modulus relative to the tire circumferential direction and is determined in accordance with JIS L1017 8.8 (2002) by testing with JIS L1017 8.5 a) (2002). In the pneumatic radial tire for passenger vehicles with narrow-width and large-diameter, local deformation occurs in the tire circumferential direction in response to inputs from the road surface during turning, and the contact patch tends to be triangular in shape, i.e., the circumferential contact length varies greatly depending on the position in the tire width direction. In contrast, the use of a highly rigid circumferential belt layer improves the ring rigidity of the tire and suppresses the deformation in the tire circumferential direction, and for that reason, the non-compressibility of the rubber also suppresses deformation in the tire width direction, and the ground contact area is less likely to change. Furthermore, the increase in ring rigidity promotes eccentric deformation, which simultaneously increases rolling resistance. Furthermore, when using a high-rigidity circumferential belt layer as described above, the inclination angle of the belt cords of the belt layers 4a, 4b with respect to the tire circumferential direction is preferably a high angle, specifically 35 degree or more. When the high-rigidity circumferential belt layer is used, the increased stiffness in the tire circumferential direction may result in reducing the ground contact length for some tires. Therefore, by using a high-angle belt layer, the out-plane flexural rigidity in the tire circumferential direction can be reduced to increase the circumferential elongation of the rubber during tread deformation, thereby reducing the reduction of the contact patch length. In this embodiment, the circumferential belt layer may also be made of wavy cords to increase breaking strength. Similarly, high elongation cords, e.g., 4.5 to 5.5% elongation at break, may be used to increase breaking strength. Furthermore, in this embodiment, a variety of materials can be employed for the circumferential belt layer and the typical examples include rayon, nylon, polyethylene naphthalate (PEN), polyethylene terephthalate (PET), aramid, glass fiber, carbon fiber, and steel. The organic fiber cords are particularly preferred in terms of weight reduction. Here, when a circumferential belt is provided, the cord of the circumferential belt layer can be a monofilament cord, a cord with multiple filaments drawn together, a cord with multiple filaments twisted together, or even a hybrid cord with filaments of different materials twisted together. In this embodiment, the number of cords in the circumferential belt layers can be in the range of 20 to 60 per 50 mm but is not limited to this range. Furthermore, in this embodiment, the stiffness, material, number of layers, and implantation density in the tire width direction can also be varied. For example, the number of the circumferential belt layers can be increased only in the shoulder area S, while the number of the circumferential belt layers can be increased only in the center region C. In this embodiment, the circumferential belt layer can be larger, smaller, or the same in the tire width direction than the belt layers 4a, 4b. For example, the tire widthwise width of the circumferential belt layer can be 90% to 110% of the widthwise width of the belt layer having the maximus widthwise width of the belt layers 4a, 4b, the belt layer 4a in the example illustrated. Here, it is particularly advantageous from a manufacturing perspective to configure the circumferential belt layer as a spiral layer.

In the illustrated example, the tread rubber forming the tread portion 5 consists of one layer. On the other hand, in this embodiment, the tread rubber forming the tread portion 5 may be consists by laminating a plurality of different rubber layers in the tire radial direction. For the plurality of rubber layers described above, rubber with different loss tangent ($\tan \delta$), modulus, hardness, glass transition temperature, material, etc. can be used. The ratio of the thicknesses of the multiple rubber layers in the tire radial direction may vary in the tire width direction, and only the bottom of the circumferential main groove, etc. may have a different rubber layer than the surrounding area. The tread rubber forming the tread portion 5 may be made up of multiple rubber layers that differ in the tire width direction. For the plurality of rubber layers described above, rubber with different loss tangent, modulus, hardness, glass transition temperature, material, etc. can be used. The ratio of the width in the tire width direction of the multiple rubber layers may vary in the tire radial direction, and only some limited areas, such as only near the circumferential main groove, only near the ground contact edge, only on the shoulder land portion, and only on the center land portion, may have a different rubber layer than the surrounding area.

The rubber gauge of the tread rubber is 2 mm or more and less than 5 mm, and preferably 4 mm or less. The rubber gauge in this embodiment is, as illustrated in Figure 2, the thickness of the tread rubber 5 from the outer surface of the tire to the outermost reinforcing member in the tire radial direction, the outermost belt layer 4b of the two belt layers 4a, 4b in the illustrated example.

In this embodiment, in the cross-sectional view of the tire width direction, when a straight line passing through point P on the tread surface at the tire equatorial plane CL and parallel to the tire width direction is m1, a straight line passing through the ground contact edge E and parallel to the tire width direction is m2, the distance in the tire radial direction between the straight lines m1 and m2 is the fall height $L_{CR}$, and the ground contact width of the tire is W, the ratio $L_{CR}/W$ is preferably 0.045 or less. By setting the ratio $L_{CR}/W$ to the above range, the crown portion of the tire is flattened, the ground contact area is increased, the input, i.e., input pressure, from the road surface is mitigated, the deflection rate in the tire radial direction is reduced, and thus the tire durability and wear resistance can be improved.

The tire 1 according to this embodiment has an inner liner 8 on the inner surface 7 of the tire which is also referred to simply as the tire inner surface 7. The thickness of the inner liner 8 is preferably about 1.5 mm to 2.8 mm. This is because it can effectively reduce vehicle-interior noise in the 80-100 Hz range. The air permeability coefficient of the rubber composition comprising the inner liner 8 is preferably $1.0 \times 10^{-14}$ cc-cm/(cm$^2$-s-cmHg) or more and $6.5 \times 10^{-10}$ cc-cm/(cm$^2$-s-cmHg) or less. It is preferable to have one or more fluorine-containing particles with a maximum diameter of 1.0 $\mu$m or greater per 100 $\mu$m$^2$ area of the tire inner surface. It is also preferable that a plurality of bladder ridges extending in the tire width direction are formed on the circumference of the tire inner surface. The bladder ridges are preferably formed at any location in the tire width direction on the tire inner surface, with at least five bladder ridges per inch in the circumferential direction of the tire.

In this embodiment, the inner liner 8 can be formed by a rubber layer consisting mainly of butyl rubber, or by a film layer consisting mainly of resin. In this embodiment, the tire inner surface 7 can also be provided with a sealant material to prevent air leakage in the event of a puncture.

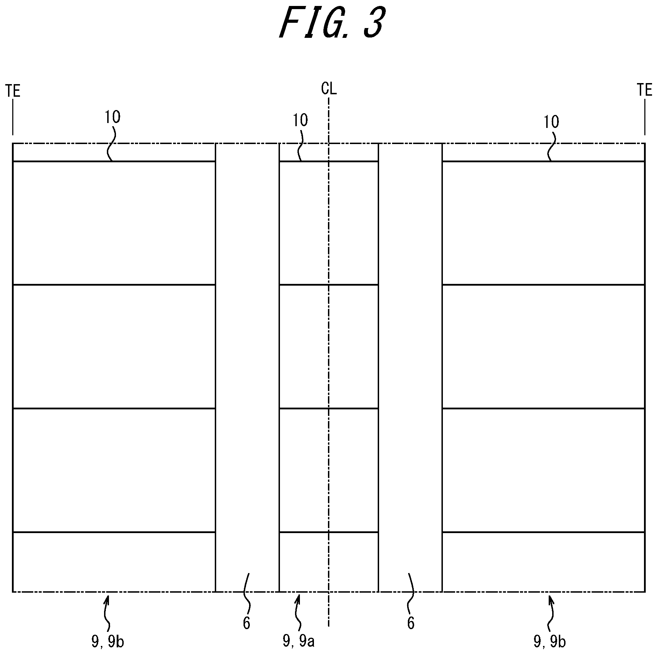

Figure 3 is a plan view, schematically illustrating the tread surface of the tread portions of the pneumatic radial tires for passenger vehicles according to one embodiment of the first to third aspects of this invention. In this embodiment, the tread surface has one or more, two in the illustrated example, circumferential main grooves 6 extending in the tire circumferential direction. The number of circumferential main grooves 6 is preferably one to four. As illustrated in Figure 3, there are one or more, three in the illustrated example, land portions 9 (9a, 9b) that are divided between the circumferential main grooves 6 or by the circumferential main grooves 6 and the tread edge TE. The number of land portions 9 is preferably 2 to 5, corresponding to the number of circumferential main grooves 6 described above. As in the illustrated example, each land portion can be a rib-like land portion that is not completely divided in the circumferential direction by the widthwise grooves extending in the tire width direction. According to this configuration, the rigidity of the land portion can be secured, and drainage can also be secured without having the widthwise grooves, since tires that satisfy the above equations for SW and OD can drain easily to the side. On the other hand, any one or more of the land portions may be a block-shaped land portion that is completely divided in the tire circumferential direction by the widthwise groove.

For example, when the number of circumferential main grooves is two, and the tire widthwise region between the ground contact edges E is divided into two central regions C and two lateral regions S by dividing the tire widthwise region into four equal parts, the two circumferential main grooves 6 is preferably located in the central area C as illustrated in this example. This is because drainage can be better secured.

Here, the term "extending in the tire circumferential direction" includes the case where extending without inclination to the tire circumferential direction as well as the case where extending at an inclination angle of 5 degrees or less with respect to the tire circumferential direction. As illustrate in the figure, the circumferential main groove 6 is preferably extends continuously in the tire circumferential direction. The shape of the circumferential main groove 6 is most preferable to be straight, as illustrated in the example, however it can also be zigzag, curved, etc.

The width, the opening width, of the circumferential main groove 6 is preferably 9 mm to 16 mm. This is because the groove width of 9 mm or more improves drainage, while the groove width of 16 mm or less ensures greater rigidity of the land portion 9. For the same reason, it is more preferable that the width of the circumferential main groove 6 is between 10 mm and 15.5 mm. The groove depth, the maximum depth, of the circumferential main groove 6 is preferably 1 to less than 5 mm. This is because a groove depth of 1 mm or more improves drainage, while a groove depth of less than 5 mm ensures the rigidity of the land portion 9. For the same reason, it is more preferable that the depth of the circumferential main groove 6 is between 2 and 4 mm.

The negative percentage of the tread surface of tread portion 5 is preferably 20% or less, more preferably 18% or less, and even more preferably 15% or less. On the other hand, from the viewpoint of ensuring drainage, the negative ratio of the tread surface of tread portion 5 is preferably at least 5%. Here, the term "negative ratio" shall mean the ratio of the groove area to the area of the tread surface. When calculating the groove area above, the groove area shall not include the area of sipes, whose opening width is 1 mm or less in the above standard condition.

As illustrated in Figure 3, a width direction sipe 10 extending in the tire width direction is formed in the land portion 9, with at least two width direction sipes 10 in the ground contact patch. The term "extending in the tire width direction" includes the case where extending without inclination to the tire width direction as illustrated in the figure, as well as the case where inclined at an angle of 50 degrees or less with respect to the tire width direction. The width direction sipe 10 is preferably a plate-like sipe. By using plate-like sipes, ride comfort performance can be further improved. On the other hand, instead of a flat section 10a, a sipe that is not flat in cross-section, such as a zigzag shape, can also be employed. Such a shape of sipe makes it easier to maintain the block rigidity of the entire land portion, which effectively reduces rolling resistance.

The sipe width, the opening width, of the width direction sipe 10 is not limited as long as it is 1 mm or less, as described above, however can be 0.3 to 0.7 mm, for example. The sipe depth, the maximum depth, of the width direction sipe 10 can be about the same as the depth of the circumferential main groove 6, although it is not limited. The pitch length in the tire circumferential direction of the width direction sipes 10 is preferably between 10 mm and 100 mm. In the illustrated example, the width direction sipes 10 are evenly spaced in the tire circumferential direction, however to reduce tire noise, the width direction sipes 10 can be arranged with a variation in pitch length, so-called pitch variation, in the tire circumferential direction.

In the illustrated example, the width direction sipe 10 is connected to the circumferential main groove 6 at both ends in the extension direction. On the other hand, the width direction sipe 10 can be a so-called one-closed sipe, where only one end is connected to the circumferential main groove 6 and the other end remains within the land portion 9, or it can be a sipe where both ends stay within the land portion 9. The use of these types of sipes will minimize the reduction in stiffness of the land portion due to the formation of the sipes.

In the illustrated example, the width direction sipes 10 are formed in all land portions 9a, 9b, however it is possible to have land portions 9 where no width direction sipes 10 are formed. In addition, in the illustrated example, the pitch length in the tire circumferential direction of the width direction sipes 10 formed on land portion 9a is the same as that of the width direction sipes 10 formed on land portion 9b, however it can be made longer or shorter.

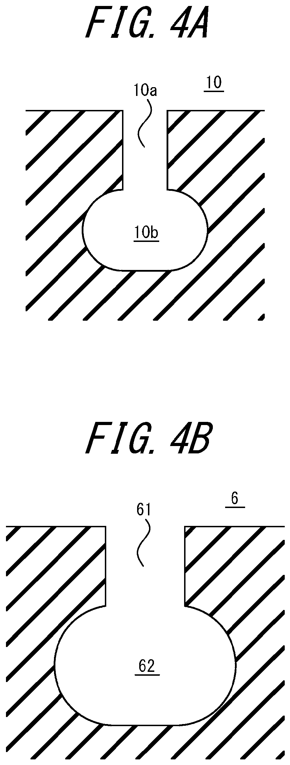

Figure 4A is the cross-sectional view illustrating an example of the width direction sipe. As illustrated in Figure 4A, in this example, the width direction sipe 10 consists of a plate-like portion 10a and a first widened portion 10b, with the first widened portion 10b on the sipe bottom side where the sipe width is larger than the tread surface side. The first widened portion 10b effectively reduces the compressive stiffness of the land portion during wear development. The sipe width, the opening width, of the plate-like portion 10a can be 0.3 to 0.7 mm, for example, although it is not limited as long as it is 1 mm or less, as well as when the width direction sipe 10 is plate-like as a whole. The sipe width, the maximum width when measured in the same direction as the opening width, of the first widened portion 10b is preferably 2 to 30 times the opening width of the plate-like portion 10a. By setting the value to 2 times or more, the compressive stiffness of the land portion can be further effectively reduced during wear development, while by setting the value to 30 times or less, the stiffness of the land portion during wear development can be prevented from decreasing to an extreme level. More preferably, the sipe width of the first widened portion 10b is 2 to 20 times the opening width of the plate-like portion 10a. In addition, the length, that is the depth, of the first widened portion 10b in the tire radial direction can be 0.4 to 9 times the length, that is the depth, of the plate-like portion 10a in the tire radial direction. By setting the value to 0.4 times or more, the compressive stiffness of the land portion can be effectively reduced as early as possible during wear development, while setting the value to 9 times or less, it is possible to prevent the land portion from losing its stiffness to an extreme degree. More preferably, the length, that is the depth, in the tire radial direction of the first widened portion 10b is preferably 0.5 to 7 times the length, that is the depth, in the tire radial direction of the plate-like portion 10a. The cross-sectional shape of the first widened portion 10b is a horizontal oval in the illustrated example, but it can be a longitudinal oval, a circular shape, a triangular shape in which the sipe width spreads inward from the outside in the tire radial direction to the inside, or various other shapes. Although not specifically limited, the sipe width, the maximum width when measured in the same direction as the opening width, of the first widened portion 10b is preferably 1.5 to 3.5 mm when the first widened portion 10b is conical, that is triangular in cross-sectional shape, and is preferably 1.0 to 2.0 mm when it is spherical, that is circular or oval in cross-sectional shape.

In this example, all width direction sipes 10 consist of the plate-like portion 10a and the first widened portion 10b as described above, however the sipes can be arranged in combination with width direction sipes 10 consisting entirely of plate-like portions and width direction sipes 10 consisting of the plate-like portion 10a and the first widened portion 10b as described above. The combination in this case is arbitrary, however as an example, at least one width direction sipe 10 consisting of the plate-like portion 10a and the first widened portion 10b as described above can be located in the ground contact patch. For example, the width direction sipes 10 consisting entirely of plate-like portions and the width direction sipes 10 consisting of the plate-like portion 10a and the first widened portion 10b as described above, can be arranged alternately in the tire circumferential direction, or every two or three in the tire circumferential direction when viewed from either sipe. The arrangement can also be changed depending on the land portion, for example, all width direction sipes 10 in any of the land portions 9 can be entirely plate-like sipes 10, and all width direction sipes 10 in the remaining land portions 9 can be width direction sipes 10 consisting of the plate-like portion 10a and the first widened portion 10b, and so on. All width direction sipes 10 on all land portions may be made entirely of plate-like portions.

Figure 4B is the cross-sectional view illustrating an example of the circumferential main groove. As illustrated in Figure 4B, in this example, the circumferential main groove 6 consists of a straight portion 61 and a second widened portion 62, with the second widened portion 62 on the groove bottom side where the groove width is larger than the tread surface side. The second widened portion 62 allows for better drainage during wear progression. The groove width, maximum width when measured in the same direction as the opening width, of the second widened portion 62 is preferably 1.1 to 1.5 times the opening width of the straight portion 61. The reason is that a value of 1.1 times or more improves drainage during wear development, while a value of 1.5 times or less ensures that the rigidity of the land portion is not reduced too much. In addition, the length, that is the depth, of the second widened portion 62 in the tire radial direction is at least 0.4 times the length, that is the depth, of the straight portion 61 in the tire radial direction. By setting the value to 0.4 times or more, drainage can be improved as early as possible during the wear progression. Preferably, the length, that is the depth, in the tire radial direction of the second widened portion 62 is at least 0.5 times the length, that is the depth, in the tire radial direction of the straight portion 61. The upper limit is not limited because the straight portion may not be provided. The cross-sectional shape of the second widened portion 62 is a horizontal oval in the illustrated example, but it can be a longitudinal oval, a circular shape, a triangular shape in which the sipe width spreads inward from the outside in the tire radial direction to the inside, or various other shapes. Although not specifically limited, the groove width, the maximum width when measured in the same direction as the opening width, of the second widened portion 62 is preferably 11 to 12 mm when the second widened portion 62 is conical, that is triangular in cross-sectional shape, and is preferably 10 to 19 mm when it is spherical, that is circular or oval in cross-sectional shape.

In other forms which are not according to the present invention but which are useful for understanding the present invention, the cross-sectional shape of the circumferential main groove 6 can be an ordinary U-shaped or V-shaped. All circumferential main grooves 6 can be the ordinary U- shaped or V-shaped. However, according to the present invention, all circumferential main grooves 6 are of a shape consisting of a straight portion 61 and a second widened portion 62.

The following is a description of the effects of the pneumatic radial tire for passenger vehicles according to this embodiment.

First, the pneumatic radial tire for passenger vehicles according to this embodiment, the cross-sectional width SW and the outer diameter OD of the tire satisfy the above predetermined relationship, thereby reducing air resistance and rolling resistance, and improving fuel efficiency. Furthermore, since the rubber gauge of the tread rubber of this tire is 2 mm or more and 5 mm or less, the tire can be made lighter by the thinner rubber gauge, further improving fuel efficiency. That is, if the rubber gauge is less than 2 mm, it will be difficult to ensure the minimum required tire life, for example, the number of retreads will increase even when retreading is performed, while if the rubber gauge is 5 mm or more, the effect of weight reduction will not be sufficient.

The tires with tread rubber with such thin rubber gauge may have poor ride comfort due to the small cushioning effect of the tread rubber between the road surface and the tire case. In particular, ride comfort is reduced, especially when the above tires are used at high internal pressure. In contrast, the tire according to this embodiment has width direction sipes extending in the tire width direction in the land portion, with two or more width direction sipes in the ground contact patch. This moderately reduces the compressive rigidity of the land portion and increases the cushioning effect of the tread rubber between the road surface and the tire case, thereby reducing the loss of ride comfort.

Thus, the pneumatic radial tire for passenger vehicles according to this embodiment can improve fuel efficiency while minimizing the decline in ride comfort.

To achieve this effect, width direction sipe is formed in any land portion so that there are two or more width direction sipes in the ground contact patch, and there may be land portions without width direction sipes. It is not necessary to have the entire width direction sipe within the ground contact patch, but only two or more width direction sipes such that at least 80% of the extension length is within the contact patch.

For the same reasons as above, the rubber gauge of the tread rubber is preferably 4 mm or less. In addition, for the same reasons as above, it is preferable to form width direction sipes extending in the tire width direction in the land portion, with three or more width direction sipes in the ground contact patch.

The sipe preferably has a widened portion on the bottom side of the sipe where the width of the sipe is larger than that of the tread surface side. This is because drainage performance during wear progress can be improved in tires with thinner rubber gauge of the tread rubber and shallower depth of the circumferential main groove. The sipes here can be width direction sipes, as illustrated in the figures, or circumferential sipes extending in the tire circumferential direction.

Further, it is preferable to have one or more circumferential main grooves extending in the tire circumferential direction on the tread surface, and the circumferential main grooves preferably have a widened portion on the groove bottom side where the groove width is larger than that of the tread surface. This is because drainage performance during wear progress can be improved in tires with thinner rubber gauge of the tread rubber and shallower depth of the circumferential main groove.

Tires with the thin rubber gauge of tread rubber described above will have a shorter tire life for the same wear progression rate, since the tread rubber is thinner. Therefore, the negative percentage of the tread surface of the tread portion is preferably 20% or less. Such tires can increase cornering power for the following reasons: (i) the tread gauge is thin and rigid because the rubber gauge of the tread rubber is less than 5 mm, (ii) the above relationship for SW and OD are satisfied, that means larger diameter relative to cross-sectional width, so the belt tension is large, and (iii) the negative ratio of the tread surface of the tread portion is set to 20% or less, resulting in high rigidity of the land portion. The increased cornering power suppresses the land portion slippage at the kick-out edge of the contact patch, thereby suppressing wear energy and slowing the rate of wear progression.

For the same reasons as above, the negative percentage of the tread surface is more preferably 18% or less, and even more preferably 15% or less.

REFERENCE SIGNS LIST

| | |
|---|---|
| 1 | pneumatic radial tire for passenger vehicles (tire) |
| 2 | bead portion |
| 3 | carcass |
| 4 | belt |
| 5 | tread portion |
| 6 | circumferential main groove |
| 7 | tire inner surface |
| 8 | inner liner |
| 9 | land portion |
| 10 | width direction sipe |

**Claims**

1. A pneumatic radial tire for passenger vehicles (1), comprising a carcass (3) consisting of plies of radially arranged cords, spanning toroidally between a pair of bead portions (2), wherein

   the cross-sectional width SW of said tire (1) is less than 165 (mm), and the ratio SW/OD of said cross-sectional width SW to the outer diameter OD of said tire (1) is 0.26 or less,
   said tire has a tread portion (5) with tread rubber,
   the rubber gauge of said tread portion (5) is 2 mm or more and less than 5 mm,
   the term "rubber gauge" refers to the rubber gauge at the tire equatorial plane under the reference state, with the tire mounted on the rim, filled with the prescribed internal pressure, and unloaded, and means the thickness in the tire radial direction from an outer surface to an outermost reinforcing member in the tire radial direction and if a groove is formed on the tire equatorial plane, the above thickness is determined by drawing a hypothetical line assuming there is no groove, and the term "prescribed internal pressure" refers to the air pressure corresponding to the maximum load capacity of a single wheel in the applicable size and ply rating in accordance with industry standards in effect in the region where the tire is produced and used, and the term "rim" refers to a standard rim in the applicable size in accordance with industry standards in effect in the region where the tire is produced and used,

the tread surface of said tread portion (5) has one or more land portions (9), and a width direction sipe (10) extending in the tire width direction is formed in said land portion (9) so that there are two or more of said width direction sipes (10) in the contact patch,

the term "contact patch" refers to the surface that will be in contact with the road surface when the tire is mounted on the rim, filled with the prescribed internal pressure, and loaded with the maximum load,

the tread surface of said tread portion (5) has one or more circumferential main grooves (6) extending in the circumferential direction and each circumferential main groove (6) consists of a straight portion (61) and a second widened portion (62), with the second widened portion (62) on the groove bottom side where the groove width is larger than the tread surface side,

the length, that is the depth, of the second widened portion (62) in the tire radial direction is at least 0.4 times the length, that is the depth, of the straight portion (61) in the tire radial direction, and

the depth of each circumferential main groove (6) is smaller than the rubber gauge.

2. A pneumatic radial tire for passenger vehicles (1), comprising a carcass (3) consisting of plies of radially arranged cords, spanning toroidally between a pair of bead portions (2), wherein

the cross-sectional width SW of said tire (1) is 165 (mm) or more, and said cross-sectional width SW (mm) and the outer diameter OD (mm) of said tire (1) satisfy the following relationship:

$$OD \text{ (mm)} \geq 2.135 \times SW \text{ (mm)} + 282.3,$$

said tire has a tread portion (5) with tread rubber,

the rubber gauge of said tread portion (5) is 2 mm or more and less than 5 mm,

the term "rubber gauge" refers to the rubber gauge at the tire equatorial plane under the reference state, with the tire mounted on the rim, filled with the prescribed internal pressure, and unloaded, and means the thickness in the tire radial direction from an outer surface to an outermost reinforcing member in the tire radial direction and if a groove is formed on the tire equatorial plane, the above thickness is determined by drawing a hypothetical line assuming there is no groove, and the term "prescribed internal pressure" refers to the air pressure corresponding to the maximum load capacity of a single wheel in the applicable size and ply rating in accordance with industry standards in effect in the region where the tire is produced and used, and the term "rim" refers to a standard rim in the applicable size in accordance with industry standards in effect in the region where the tire is produced and used,

the tread surface of said tread portion (5) has one or more land portions (9), and a width direction sipe (10) extending in the tire width direction is formed in said land portion (9) so that there are two or more of said width direction sipes (10) in the contact patch,

the term "contact patch" refers to the surface that will be in contact with the road surface when the tire is mounted on the rim, filled with the prescribed internal pressure, and loaded with the maximum load,

the tread surface of said tread portion (5) has one or more circumferential main grooves (6) extending in the circumferential direction and each circumferential main groove (6) consists of a straight portion (61) and a second widened portion (62), with the second widened portion (62) on the groove bottom side where the groove width is larger than the tread surface side,

the length, that is the depth, of the second widened portion (62) in the tire radial direction is at least 0.4 times the length, that is the depth, of the straight portion (61) in the tire radial direction, and

the depth of each circumferential main groove (6) is smaller than the rubber gauge.

3. A pneumatic radial tire for passenger vehicles (1), comprising a carcass (3) consisting of plies of radially arranged cords, spanning toroidally between a pair of bead portions (2), wherein

the cross-sectional width SW (mm) and the outer diameter OD (mm) of said tire (1) satisfy the following relationship:

$$OD \text{ (mm)} \geq -0.0187 \times SW \text{ (mm)}^2 + 9.15 \times SW \text{ (mm)} - 380,$$

said tire (1) has a tread portion (5) with tread rubber,

the rubber gauge of said tread portion (5) is 2 mm or more and less than 5 mm,

the term "rubber gauge" refers to the rubber gauge at the tire equatorial plane under the reference state, with the tire mounted on the rim, filled with the prescribed internal pressure, and unloaded, and means the thickness in the tire radial direction from an outer surface to an outermost reinforcing member in the tire radial direction and if a groove is formed on the tire equatorial plane, the above thickness is determined by drawing a hypothetical line assuming there is no groove, and the term "prescribed internal pressure" refers to the air pressure corresponding to the maximum load capacity of a single wheel in the applicable size and ply rating in accordance with industry standards in effect in the region where the tire is produced and used, and the term "rim" refers to a standard rim in the applicable size in accordance with industry standards in effect in the region where the tire is produced and used,

the tread surface of said tread portion (5) has one or more land portions (9), and a width direction sipe (10) extending in the tire width direction is formed in said land portion (9) so that there are two or more of said width direction sipes (10) in the contact patch,

the term "contact patch" refers to the surface that will be in contact with the road surface when the tire is mounted on the rim, filled with the prescribed internal pressure, and loaded with the maximum load, and

the tread surface of said tread portion (5) has one or more circumferential main grooves (6) extending in the circumferential direction and each circumferential main groove (6) consists of a straight portion (61) and a second widened portion (62), with the second widened portion (62) on the groove bottom side where the groove width is larger than the tread surface side,

the length, that is the depth, of the second widened portion (62) in the tire radial direction is at least 0.4 times the length, that is the depth, of the straight portion (61) in the tire radial direction, and

the depth of each circumferential main groove (6) is smaller than the rubber gauge.

4. A pneumatic radial tire for passenger vehicles (1) according to any one of claims 1 to 3, wherein said sipe (10) has a widened portion on the bottom side of said sipe (10) where the sipe width is larger than said tread surface side.

**Patentansprüche**

1. Radial-Luftreifen für Personenkraftwagen (1), umfassend eine Karkasse (3), die aus Lagen von radial angeordneten Kordfäden besteht, die sich kreisringförmig zwischen einem Paar von Wulstabschnitten (2) erstrecken, wobei:

die Querschnittsbreite SW des Reifens (1) kleiner als 165 (mm) ist und das Verhältnis SW/OD der Querschnittsbreite SW zum Außendurchmesser OD des Reifens (1) 0,26 oder weniger beträgt,
der Reifen einen Laufflächenabschnitt (5) mit Laufflächengummi aufweist,
die Gummidicke des Laufflächenabschnitts (5) 2 mm oder mehr und weniger als 5 mm beträgt,
der Begriff "Gummidicke" sich auf die Gummidicke in der Reifenäquatorialebene im Referenzzustand bezieht, in dem der Reifen auf der Felge angebracht, mit dem vorgeschriebenen Innendruck befüllt und unbelastet ist, und die Dicke in der Reifenradialrichtung von einer äußeren Oberfläche zu einem äußersten Verstärkungselement in der Reifenradialrichtung bedeutet, und wobei, wenn eine Rille in der Reifenäquatorialebene ausgebildet ist, die oben genannte Dicke durch Ziehen einer hypothetischen Linie bestimmt wird, wobei angenommen wird, dass keine Rille vorhanden ist, und wobei der Begriff "vorgeschriebener Innendruck" sich auf den Luftdruck bezieht, welcher der maximalen Tragfähigkeit eines einzelnen Rades in der zutreffenden Größe und Reifenfestigkeit gemäß den Industriestandards entspricht, die in der Region gelten, in welcher der Reifen hergestellt und verwendet wird, und wobei der Begriff "Felge" sich auf eine Standardfelge in der zutreffenden Größe gemäß den Industriestandards bezieht, die in der Region gelten, in welcher der Reifen hergestellt und verwendet wird,
die Lauffläche des Laufflächenabschnitts (5) einen oder mehrere Stegabschnitte (9) aufweist und in dem Stegabschnitt (9) eine in der Reifenbreitenrichtung verlaufende Breitenrichtungslamelle (10) ausgebildet ist, sodass es in der Aufstandsfläche zwei oder mehr der Breitenrichtungslamellen (10) gibt,
der Begriff "Aufstandsfläche" sich auf die Oberfläche bezieht, die mit der Fahrbahn in Kontakt kommt, wenn der Reifen auf der Felge angebracht, mit dem vorgeschriebenen Innendruck befüllt und mit der maximalen Last belastet ist,
die Lauffläche des Laufflächenabschnitts (5) eine oder mehrere in der Umfangsrichtung verlaufende Umfangshauptrillen (6) aufweist und jede Umfangshauptrille (6) aus einem geraden Abschnitt (61) und einem zweiten verbreiterten Abschnitt (62) besteht, wobei der zweite verbreiterte Abschnitt (62) sich an der Rillenunterseite befindet, wo die Rillenbreite größer als an der Laufflächenseite ist,
die Länge, d. h. die Tiefe, des zweiten verbreiterten Abschnitts (62) in der Reifenradialrichtung mindestens das 0,4-Fache der Länge, d. h. der Tiefe, des geraden Abschnitts (61) in der Reifenradialrichtung beträgt, und
die Tiefe jeder Umfangshauptrille (6) kleiner als die Gummidicke ist.

2. Radial-Luftreifen für Personenkraftwagen (1), umfassend eine Karkasse (3), die aus Lagen von radial angeordneten Kordfäden besteht, die sich kreisringförmig zwischen einem Paar von Wulstabschnitten (2) erstrecken, wobei:

die Querschnittsbreite SW des Reifens (1) 165 (mm) oder mehr beträgt und die Querschnittsbreite SW (mm) und der Außendurchmesser OD (mm) des Reifens (1) die folgende Beziehung erfüllen: OD (mm) $\geq$ 2,135 $\times$ SW (mm) + 282,3,
der Reifen einen Laufflächenabschnitt (5) mit Laufflächengummi aufweist,
die Gummidicke des Laufflächenabschnitts (5) 2 mm oder mehr und weniger als 5 mm beträgt,
der Begriff "Gummidicke" sich auf die Gummidicke in der Reifenäquatorialebene im Referenzzustand bezieht, in dem der Reifen auf der Felge angebracht, mit dem vorgeschriebenen Innendruck befüllt und unbelastet ist, und die Dicke in der Reifenradialrichtung von einer äußeren Oberfläche zu einem äußersten Verstärkungselement in der Reifenradialrichtung bedeutet, und wobei, wenn eine Rille in der Reifenäquatorialebene ausgebildet ist, die oben genannte Dicke durch Ziehen einer hypothetischen Linie bestimmt wird, wobei angenommen wird, dass keine Rille vorhanden ist, und wobei der Begriff "vorgeschriebener Innendruck" sich auf den Luftdruck bezieht, welcher der maximalen Tragfähigkeit eines einzelnen Rades in der zutreffenden Größe und Reifenfestigkeit gemäß den Industriestandards entspricht, die in der Region gelten, in welcher der Reifen hergestellt und verwendet wird, und wobei der Begriff "Felge" sich auf eine Standardfelge in der zutreffenden Größe gemäß den Industriestandards bezieht, die in der Region gelten, in welcher der Reifen hergestellt und verwendet wird,
die Lauffläche des Laufflächenabschnitts (5) einen oder mehrere Stegabschnitte (9) aufweist und in dem Stegabschnitt (9) eine in der Reifenbreitenrichtung verlaufende Breitenrichtungslamelle (10) ausgebildet ist, sodass es in der Aufstandsfläche zwei oder mehr der Breitenrichtungslamellen (10) gibt,
der Begriff "Aufstandsfläche" sich auf die Oberfläche bezieht, die mit der Fahrbahn in Kontakt kommt, wenn der Reifen auf der Felge angebracht, mit dem vorgeschriebenen Innendruck befüllt und mit der maximalen Last belastet ist,
die Lauffläche des Laufflächenabschnitts (5) eine oder mehrere in der Umfangsrichtung verlaufende Umfangshauptrillen (6) aufweist und jede Umfangshauptrille (6) aus einem geraden Abschnitt (61) und einem zweiten verbreiterten Abschnitt (62) besteht, wobei der zweite verbreiterte Abschnitt (62) sich an der Rillenunterseite befindet, wo die Rillenbreite größer als an der Laufflächenseite ist,
die Länge, d. h. die Tiefe, des zweiten verbreiterten Abschnitts (62) in der Reifenradialrichtung mindestens das 0,4-Fache der Länge, d. h. der Tiefe, des geraden Abschnitts (61) in der Reifenradialrichtung beträgt, und
die Tiefe jeder Umfangshauptrille (6) kleiner als die Gummidicke ist.

3. Radial-Luftreifen für Personenkraftwagen (1), umfassend eine Karkasse (3), die aus Lagen von radial angeordneten Kordfäden besteht, die sich kreisringförmig zwischen einem Paar von Wulstabschnitten (2) erstrecken, wobei:

die Querschnittsbreite SW (mm) und der Außendurchmesser OD (mm) des Reifens (1) die folgende Beziehung erfüllen:

$$OD\ (mm) \geq -0,0187 \times SW\ (mm)^2 + 9,15 \times SW\ (mm) - 380,$$

der Reifen einen Laufflächenabschnitt (5) mit Laufflächengummi aufweist,
die Gummidicke des Laufflächenabschnitts (5) 2 mm oder mehr und weniger als 5 mm beträgt,
der Begriff "Gummidicke" sich auf die Gummidicke in der Reifenäquatorialebene im Referenzzustand bezieht, in dem der Reifen auf der Felge angebracht, mit dem vorgeschriebenen Innendruck befüllt und unbelastet ist, und die Dicke in der Reifenradialrichtung von einer äußeren Oberfläche zu einem äußersten Verstärkungselement in der Reifenradialrichtung bedeutet, und wobei, wenn eine Rille in der Reifenäquatorialebene ausgebildet ist, die oben genannte Dicke durch Ziehen einer hypothetischen Linie bestimmt wird, wobei angenommen wird, dass keine Rille vorhanden ist, und wobei der Begriff "vorgeschriebener Innendruck" sich auf den Luftdruck bezieht, welcher der maximalen Tragfähigkeit eines einzelnen Rades in der zutreffenden Größe und Reifenfestigkeit gemäß den Industriestandards entspricht, die in der Region gelten, in welcher der Reifen hergestellt und verwendet wird, und wobei der Begriff "Felge" sich auf eine Standardfelge in der zutreffenden Größe gemäß den Industriestandards bezieht, die in der Region gelten, in welcher der Reifen hergestellt und verwendet wird,
die Lauffläche des Laufflächenabschnitts (5) einen oder mehrere Stegabschnitte (9) aufweist und in dem Stegabschnitt (9) eine in der Reifenbreitenrichtung verlaufende Breitenrichtungslamelle (10) ausgebildet ist, sodass es in der Aufstandsfläche zwei oder mehr der Breitenrichtungslamellen (10) gibt,
der Begriff "Aufstandsfläche" sich auf die Oberfläche bezieht, die mit der Fahrbahn in Kontakt kommt, wenn der Reifen auf der Felge angebracht, mit dem vorgeschriebenen Innendruck befüllt und mit der maximalen Last belastet ist,

die Lauffläche des Laufflächenabschnitts (5) eine oder mehrere in der Umfangsrichtung verlaufende Umfangshauptrillen (6) aufweist und jede Umfangshauptrille (6) aus einem geraden Abschnitt (61) und einem zweiten verbreiterten Abschnitt (62) besteht, wobei der zweite verbreiterte Abschnitt (62) sich an der Rillenunterseite befindet, wo die Rillenbreite größer als an der Laufflächenseite ist,

die Länge, d. h. die Tiefe, des zweiten verbreiterten Abschnitts (62) in der Reifenradialrichtung mindestens das 0,4-Fache der Länge, d. h. der Tiefe, des geraden Abschnitts (61) in der Reifenradialrichtung beträgt, und die Tiefe jeder Umfangshauptrille (6) kleiner als die Gummidicke ist.

**4.** Radial-Luftreifen für Personenkraftwagen (1) nach einem der Ansprüche 1 bis 3, wobei die Lamelle (10) einen verbreiterten Abschnitt an der Unterseite der Lamelle (10) aufweist, wo die Lamellenbreite größer als an der Laufflächenseite ist.

## Revendications

**1.** Pneumatique radial pour véhicules de tourisme (1), comprenant une carcasse (3) constituée par des plis de câblés radialement agencés, s'étalant toroïdalement entre une paire de portions formant talon (2), dans lequel

la largeur transversale SW dudit pneumatique (1) est de moins de 165 (mm), et le rapport SW/OD entre ladite largeur transversale SW et le diamètre extérieur OD dudit pneumatique (1) est de 0,26 ou moins, ledit pneumatique a une portion formant bande de roulement (5) avec de la gomme de bande de roulement, l'épaisseur de gomme de ladite portion formant bande de roulement (5) est de 2 mm ou plus, et de moins de 5 mm, le terme « épaisseur de gomme » fait référence à l'épaisseur de gomme au niveau du plan équatorial de pneumatique dans l'état de référence, avec le pneumatique monté sur la jante, gonflé à la pression interne prescrite, et sans charge, et signifie l'épaisseur dans la direction radiale de pneumatique depuis une surface externe vers un organe de renfort le plus à l'extérieur dans la direction radiale de pneumatique et si une rainure est formée sur le plan équatorial de pneumatique, l'épaisseur ci-dessus est déterminée par traçage d'une ligne imaginaire en supposant qu'il n'y ait pas de rainure, et le terme « pression interne prescrite » fait référence à la pression d'air correspondant à la capacité de charge utile maximale d'une seule roue dans la taille et l'indice de pli applicables selon les normes industrielles en vigueur dans la région où le pneumatique est produit et utilisé, et le terme « jante » fait référence à une jante standard dans la taille applicable selon les normes industrielles en vigueur dans la région où le pneumatique est produit et utilisé, la surface de bande de roulement de ladite portion formant bande de roulement (5) a une ou plusieurs portions d'appui (9), et une lamelle de direction de largeur (10) s'étendant dans la direction de largeur de pneumatique est formée dans ladite portion d'appui (9) de sorte qu'il y a deux ou plusieurs desdites lamelles de direction de largeur (10) dans la surface de contact, le terme «surface de contact » fait référence à la surface qui sera en contact avec la surface de la route lorsque le pneumatique est monté sur la jante, gonflé à la pression interne prescrite, et avec la charge maximale, la surface de bande de roulement de ladite portion formant bande de roulement (5) a une ou plusieurs rainures principales circonférentielles (6) s'étendant dans la direction circonférentielle et chaque rainure principale circonférentielle (6) est constituée par une portion droite (61) et une deuxième portion élargie (62), la deuxième portion élargie (62) étant sur le côté fond de rainure où la largeur de rainure est plus grande que sur le côté surface de bande de roulement, la longueur, à savoir la profondeur, de la deuxième portion élargie (62) dans la direction radiale de pneumatique est d'au moins 0,4 fois la longueur, à savoir la profondeur, de la portion droite (61) dans la direction radiale de pneumatique, et la profondeur de chaque rainure principale circonférentielle (6) est plus petite que l'épaisseur de gomme.

**2.** Pneumatique radial pour véhicules de tourisme (1), comprenant une carcasse (3) constituée par des plis de câblés radialement agencés, s'étalant toroïdalement entre une paire de portions formant talon (2), dans lequel la largeur transversale SW dudit pneumatique (1) est de 165 (mm) ou plus, et ladite largeur transversale SW (mm) et le diamètre extérieur OD (mm) dudit pneumatique (1) satisfont à la relation suivante : OD (mm) $\geq 2,135 \times$ SW (mm) + 282,3,

ledit pneumatique a une portion formant bande de roulement (5) avec de la gomme de bande de roulement, l'épaisseur de gomme de ladite portion formant bande de roulement (5) est de 2 mm ou plus, et de moins de 5 mm, le terme « épaisseur de gomme » fait référence à l'épaisseur de gomme au niveau du plan équatorial de pneumatique dans l'état de référence, avec le pneumatique monté sur la jante, gonflé à la pression interne prescrite, et sans charge, et signifie l'épaisseur dans la direction radiale de pneumatique depuis une surface externe vers un organe de renfort le plus à l'extérieur dans la direction radiale de pneumatique et si une rainure est formée sur le plan équatorial de pneumatique, l'épaisseur ci-dessus est déterminée par traçage d'une ligne imaginaire en supposant qu'il n'y ait pas de rainure, et le terme « pression interne prescrite » fait référence à la pression d'air correspondant à la capacité de charge utile maximale d'une seule roue dans la taille et l'indice de pli applicables selon les normes industrielles en vigueur dans la région où le pneumatique est produit et utilisé, et le terme « jante » fait référence à une jante standard dans la taille applicable selon les normes industrielles en vigueur dans la région où le pneumatique est produit et utilisé,

la surface de bande de roulement de ladite portion formant bande de roulement (5) a une ou plusieurs portions d'appui (9), et une lamelle de direction de largeur (10) s'étendant dans la direction de largeur de pneumatique est formée dans ladite portion d'appui (9) de sorte qu'il y a deux ou plusieurs desdites lamelles de direction de largeur (10) dans la surface de contact,

le terme « surface de contact » fait référence à la surface qui sera en contact avec la surface de la route lorsque le pneumatique est monté sur la jante, gonflé à la pression interne prescrite, et avec la charge maximale,

la surface de bande de roulement de ladite portion formant bande de roulement (5) a une ou plusieurs rainures principales circonférentielles (6) s'étendant dans la direction circonférentielle et chaque rainure principale circonférentielle (6) est constituée par une portion droite (61) et une deuxième portion élargie (62), la deuxième portion élargie (62) étant sur le côté fond de rainure où la largeur de rainure est plus grande que sur le côté surface de bande de roulement,

la longueur, à savoir la profondeur, de la deuxième portion élargie (62) dans la direction radiale de pneumatique est d'au moins 0,4 fois la longueur, à savoir la profondeur, de la portion droite (61) dans la direction radiale de pneumatique, et

la profondeur de chaque rainure principale circonférentielle (6) est plus petite que l'épaisseur de gomme.

3. Pneumatique radial pour véhicules de tourisme (1), comprenant une carcasse (3) constituée par des plis de câblés radialement agencés, s'étalant toroïdalement entre une paire de portions formant talon (2), dans lequel

la largeur transversale SW (mm) et le diamètre extérieur OD (mm) dudit pneumatique (1) satisfont à la relation suivante :

$$OD \text{ (mm)} \geq -0{,}0187 \times SW \text{ (mm)}^2 + 9{,}15 \times SW \text{ (mm)} - 380,$$

ledit pneumatique (1) a une portion formant bande de roulement (5) avec de la gomme de bande de roulement, l'épaisseur de gomme de ladite portion formant bande de roulement (5) est de 2 mm ou plus, et de moins de 5 mm, le terme « épaisseur de gomme » fait référence à l'épaisseur de gomme au niveau du plan équatorial de pneumatique dans l'état de référence, avec le pneumatique monté sur la jante, gonflé à la pression interne prescrite, et sans charge, et signifie l'épaisseur dans la direction radiale de pneumatique depuis une surface externe vers un organe de renfort le plus à l'extérieur dans la direction radiale de pneumatique et si une rainure est formée sur le plan équatorial de pneumatique, l'épaisseur ci-dessus est déterminée par traçage d'une ligne imaginaire en supposant qu'il n'y ait pas de rainure, et le terme « pression interne prescrite » fait référence à la pression d'air correspondant à la capacité de charge utile maximale d'une seule roue dans la taille et l'indice de pli applicables selon les normes industrielles en vigueur dans la région où le pneumatique est produit et utilisé, et le terme « jante » fait référence à une jante standard dans la taille applicable selon les normes industrielles en vigueur dans la région où le pneumatique est produit et utilisé,

la surface de bande de roulement de ladite portion formant bande de roulement (5) a une ou plusieurs portions d'appui (9), et une lamelle de direction de largeur (10) s'étendant dans la direction de largeur de pneumatique est formée dans ladite portion d'appui (9) de sorte qu'il y a deux ou plusieurs desdites lamelles de direction de largeur (10) dans la surface de contact,

le terme « surface de contact » fait référence à la surface qui sera en contact avec la surface de la route lorsque le pneumatique est monté sur la jante, gonflé à la pression interne prescrite, et avec la charge maximale, et

la surface de bande de roulement de ladite portion formant bande de roulement (5) a une ou plusieurs rainures principales circonférentielles (6) s'étendant dans la direction circonférentielle et chaque rainure principale circonférentielle (6) est constituée par une portion droite (61) et une deuxième portion élargie (62), la deuxième portion élargie (62) étant sur le côté fond de rainure où la largeur de rainure est plus grande que sur le côté surface de bande de roulement,

la longueur, à savoir la profondeur, de la deuxième portion élargie (62) dans la direction radiale de pneumatique est d'au moins 0,4 fois la longueur, à savoir la profondeur, de la portion droite (61) dans la direction radiale de pneumatique, et

la profondeur de chaque rainure principale circonférentielle (6) est plus petite que l'épaisseur de gomme.

4. Pneumatique radial pour véhicules de tourisme (1) selon l'une quelconque des revendications 1 à 3, dans lequel ladite lamelle (10) a une portion élargie sur le côté fond de ladite lamelle (10) où la largeur de lamelle est plus grande que ledit côté surface de bande de roulement.

# *FIG. 1*

# FIG. 2

EP 4 223 560 B1

# FIG. 3

# FIG. 4A

# FIG. 4B

**EP 4 223 560 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011207283 A
- EP 3202596 A1
- WO 2019124037 A1
- WO 2013065319 A1
- JP 2017206194 A